# EUROPÄISCHE PATENTANMELDUNG

(11) **EP 1 594 339 A1**
(43) Veröffentlichungstag der Anmeldung: **09.11.2005**
(21) Anmeldenummer: 04010676.7
(22) Anmeldetag: 05.05.2004
(51) Int. Cl.: H04Q 11/04, H04J 3/16

(54) **Fernwartung von Maschinen über eine Sprach-, Video-, und Datenverbindung**

(71) Anmelder: SIEMENS AKTIENGESELLSCHAFT, 80333 München (DE)
(72) Erfinder: Gottschalk, Steffen, 01445 Radebeul (DE); Keil, Simone, 01640 Coswig (DE); Kummer, Torsten, 01640 Coswig (DE); Wersig, Bodo, 01904 Neukirch (DE)

(57) **Zusammenfassung**

Die vorliegende Erfindung bezieht sich auf eine Einrichtung und ein System zur Fernwartung von Maschinen, beispielsweise Werkzeugmaschinen, Verpackungsmaschinen, große Baumaschinen oder Druckmaschinen. Eine Fernwartungseinrichtung gemäß der Erfindung weist Mittel zum Anschluß an die Steuerung einer Maschine auf sowie Mittel zum bidirektionalen Austausch von Sprachdaten, Videodaten und Maschinendaten über eine Fernwartungsverbindung mit einer entfernten Fernwartungszentrale. Die Fernwartungsverbindung weist eine maximale Bandbreite auf, und den Sprach-, Video- und Maschinendaten sind jeweils partielle Bandbreiten zugeordnet. Die Fernwartungseinrichtung zeichnet sich durch Mittel zur dynamischen Anpassung der partiellen Bandbreiten aus.

## Beschreibung

Die vorliegende Erfindung bezieht sich auf eine Einrichtung und ein System zur Fernwartung von Maschinen, beispielsweise Werkzeugmaschinen, Verpackungsmaschinen, große Baumaschinen oder Druckmaschinen.

Maschinen, in denen komplexe Arbeitsgänge halbautomatisch oder vollautomatisch ablaufen und die entweder selbst eine Art Taktstraße realisieren oder Bestandteil einer Taktstraße sind, sind in der Regel hochkomplexe Systeme, bei denen Aufgaben wie Wartung, Fehlerdiagnose und Fehlerbehebung nur durch hochspezialisierte Fachkräfte - oder unter deren unmittelbarer Anleitung durch das Bedienpersonal - ausgeführt werden können. Diese hochspezialisierten Fachkräfte sind in der Regel in Serviceteams des Maschinenherstellers organisiert, die dann an den - häufig geographisch weit entfernten - Aufstellort der zu wartenden oder instand zu setzenden Maschine reisen, um die genannten Aufgaben durchzuführen.

Gleichzeitig sind Stillstandszeiten oder Zeiten verminderter Leistungsfähigkeit einer solchen Maschine, die allein durch die Reaktions- und Reisezeit eines Serviceteams notwendigerweise entstehen, ökonomisch unvertretbar, denn häufig führt der Stillstand einer Maschine zum Stillstand einer kompletten Produktion oder, im Fall der Verpackungsmaschinen, zum Stillstand der Auslieferung und folglich zu Lieferverzögerungen. Ferner sollen die teils erheblichen Anreisekosten für ein Serviceteam vermieden werden.

Daher werden bereits seit geraumer Zeit Fernwartungssysteme eingesetzt, bei denen von einer Fernwartungszentrale aus auf den Steuerrechner einer Maschine zugegriffen werden kann, um Softwareupdates der Steuersoftware und andere Wartungsaufgaben vorzunehmen und einfache Diagnoseaufgaben, etwa durch Auslesen von Fehlerspeichern und anderen Selbstdiagnoseeinrichtungen der Maschine, vorzunehmen. Ein Serviceteam kann dann eine Reihe von Fehlern früh genug erkennen und rechtzeitig anreisen oder Wartungsanweisungen an das Bedienpersonal übermitteln, um einen Stillstand der Maschine zu vermeiden.

Allerdings können nicht alle Fehler mit einem solchen System früh genug erkannt werden, da es unwirtschaftlich ist, jeden Fehlerfall mit einer aufwendigen Selbstdiagnosefunktion zu überwachen. Ferner verbleibt eine Reihe von "spontanen" Fehlern, die mittels Selbstdiagnose nicht oder zumindest nicht rechtzeitig erkennbar sind, z.B. solche, die auf eine Fehlbedienung zurückzuführen sind. Schließlich ist im Fehlerfall oft das Anreisen eines hochspezialisierten Serviceteams unumgänglich, da telefonisch Anweisungen zur Fehlerbehebung an das Bedienpersonal vor Ort "blind" gegeben werden, d.h. das Serviceteam kann den Fehler und seine Ursache visuell nicht erfassen und ist auf die Beschreibung der Situation durch das Bedienpersonal und auf die Selbstdiagnosedaten angewiesen, die ein falsches Bild der Situation liefern können.

Um diesen Nachteil zu umgehen, ist z.B. aus EP 0 727 313 A1 für Druckmaschinen bekannt, zwischen einer Druckerei und einem Druckmaschinenhersteller eine Online-Wartung durchzuführen. Der Hersteller besitzt eine Ferndiagnose- und Fernwartungsstation, in der ein Monitor installiert ist. In der Druckerei werden von einer Fernsehkamera Bilder von einer Druckmaschine aufgenommen. Diese Bilder werden zur Ferndiagnose-und Fernwartungsstation des Herstellers übertragen. Dort werden die auf dem Monitor dargestellten Bilder aus der Druckmaschine von einem Fachmann ausgewertet. Dieser gibt über eine Telefonverbindung (nicht mehr "blind") Ratschläge zur Reparatur der Druckmaschine in der Druckerei. Es ist sogar möglich, über eine Online-Verbindung in die Steuerung der Druckmaschine einzugreifen.

Ferner ist aus EP 1 155 851 A1, die sich ebenfalls auf Druckmaschinen bezieht, bekannt, einen ISDN-Basisanschluß, auch bekannt als S₀-Anschluß, für eine Fernwartungsverbindung an einer Druckmaschine einzusetzen. Nachteilig ist dabei, daß die Komponenten der Fernwartungsverbindung (Sprache; Video; Systemdaten, z.B. Diagnosespeicher auslesen oder Softwareupdate am Steuerrechner vornehmen) jeweils mindestens einen B-Kanal der ISDN-Verbindung exklusiv belegen. Beispielsweise wird dadurch unvorteilhafterweise die Videoübertragungsbandbreite stets auf 64kbit/s (ein B-Kanal) begrenzt, wenn parallel eine Sprachverbindung aufgebaut ist, welche wiederum in den meisten Fällen zur Verständigung des Serviceteams mit dem Bedienpersonal vor Ort unerläßlich ist, oder wenn parallel eine Maschinensteuerverbindung aufgebaut ist.

Eine Aufgabe der Erfindung kann somit darin gesehen werden, eine Fernwartungseinrichtung und ein Fernwartungssystem anzugeben, bei denen die zur Verfügung stehende Bandbreite der Fernwartungsverbindung effektiver genutzt wird.

Diese Aufgabe wird gelöst durch eine Fernwartungseinrichtung zum Anschluß an die Steuerung einer Maschine, welche Mittel zum bidirektionalen Austausch von Sprachdaten, Videodaten und Maschinendaten über eine Fernwartungsverbindung mit einer entfernten Fernwartungszentrale aufweist. Die Fernwartungsverbindung weist eine maximale Bandbreite auf, und den Sprach-, Video- und Maschinendaten sind jeweils partielle Bandbreiten zugeordnet. Die Fernwartungseinrichtung zeichnet sich durch Mittel zur dynamischen Anpassung der partiellen Bandbreiten aus.

Gegenüber herkömmlichen Fernwartungseinrichtungen, die mit einer festgelegten Bandbreite für die genannten Datenströme arbeiten, ermöglicht die dynamische Anpassung der diesen Datenströmen zugeordneten partiellen Bandbreiten eine wesentlich verbesserte Ausnutzung der zur Verfügung stehenden maximalen Bandbreite. Beispielsweise kann die gesamte zur Verfügung stehende Bandbreite der Videoübertragung von der Fernwartungseinrichtung zur Fernwartungszentrale zugewiesen werden, etwa wenn schnelle Bewegungen (z.B. eines rotierenden Maschinenteils) vom Arbeitsplatz in der Fernwartungszentrale überwacht werden sollen. Anschließend kann beispielsweise für einen kurzen Zeitraum den Maschinendaten eine bestimmte Bandbreite eingeräumt werden (welche dann für die Videoübertragung nicht mehr zur Verfügung steht), um von der Fernwartungszentrale aus eine Stellgröße zu modifizieren oder einen neuen Regelalgorithmus in die Maschinensteuersoftware einzuspielen und um anschließend - nach erneuter Zuweisung der gesamten zur Verfügung stehende Bandbreite zur Videoübertragung - die Auswirkungen auf die genannte schnelle Bewegung mit bestmöglicher Videoqualität zu überwachen.

Während verschiedene bekannte Fernwartungslösungen, bei denen auch Videosignale übertragen werden, Vorbereitungsarbeiten oder spezielle Schnittstellen an den zu wartenden bzw. instand zu setzenden Maschinen vorsehen, über die jedoch nur hochmoderne Maschinen verfügen, z.B. fest installierte Videosensoren oder im Bedarfsfall an vorgegebenen Positionen einsteckbare Videosensoren, die einerseits nur feste Bildausschnitte liefern und andererseits nur für einen Maschinentyp einsetzbar sind, setzt die vorliegende Erfindung solche Vorbereitungen nicht voraus. Vielmehr ist die vorliegende Erfindung vorteilhaft mit Maschinen beliebigen Typs und Baujahrs einsetzbar; Änderungen an den Maschinen sind nicht erforderlich.

Bevorzugt kommt für die Fernwartungsverbindung eine ISDN-Verbindung zum Einsatz, da ISDN in vielen Ländern verfügbar ist. Aufgrund der dynamischen Bandbreitenanpassung ist es durch die Erfindung möglich, die Übertragung von Sprache, Video und Maschinendaten kostengünstig mit einer herkömmlichen ISDN-S₀-Verbindung (2 B-Kanäle) vorzunehmen, wobei die maximale Bandbreite in diesem Fall 128 kbit/s beträgt. Ein ISDN-Router sorgt dafür, daß nur dann beide B-Kanäle aktiviert werden und (ggf. internationale) mehrfache Verbindungsgebühren anfallen, wenn die Situation dies erfordert. Andererseits steht die maximale Bandbreite von 128 kbit/s im Bedarfsfall vollständig für die Videoübertragung zur Verfügung.

Stehen mehrere ISDN-Basisanschlüsse mit je 2 Kanälen oder ein ISDN-Primärmultiplexanschluß mit 30 Kanälen und einer maximalen Bandbreite von 2048 kbit/s zur Verfügung, können durch einen entsprechend angepaßten Router alle Kanäle entsprechend belegt werden.

Alternativ kann die Fernwartungsverbindung auch mittels breitbandiger Internetverbindung oder drahtlos, beispielsweise mittels UMTS-Verbindung, GSM-Verbindung mit Kanalbündelung, GPRS-Verbindung, WLAN-Verbindung oder Satellitenverbindung, realisiert werden.

Vorzugsweise dient ein angepaßtes Videokonferenzsystem zur Lieferung der Sprach- und Videodaten. Vorteilhaft besteht dies aus einer portablen Kamera zur Aufnahme visueller Informationen an der zu wartenden Maschine und einer portablen Sprech- und Höreinrichtung. Zusätzlich kann ein portables Anzeigegerät vorgesehen sein, etwa ein an der Sprech- und Höreinrichtung angebrachtes head mounted display (HMD), zum Anzeigen von visuellen Informationen, welche vom Arbeitsplatz in der Fernwartungszentrale an das Videokonferenzsystem der Fernwartungseinrichtung übertragen werden und z.B. Montageskizzen umfassen.

In einer Ausgestaltung der erfindungsgemäßen Fernwartungseinrichtung sind die portablen Geräte (Kamera, Sprech/Höreinrichtung, HMD) drahtlos mit dem restlichen Videokonferenzsystem gekoppelt. Dies ist von Vorteil, da in Maschinenhallen, in denen die zu wartenden Maschinen üblicherweise installiert sind, strenge Sicherheitsvorkehrungen gelten, die ungeordnet herumliegende Kabel verbieten und somit bei kabelgebundenen Lösungen eine aufwendige Kabelführung erforderlich wäre, die einen flexiblen Einsatz der Kamera nahezu verhindern würde. Ferner werden in Maschinenhallen häufig Gegenstände mittels Staplern transportiert, die dann die Kabel überfahren müßten, was die Lebensdauer der Kabel stark beeinträchtigen würde.

Ist in besonderen Fällen die Qualität der Videoübertragung mit der maximalen zur Verfügung stehenden Bandbreite nicht ausreichend, um besonders schnelle Bewegungen mit ausreichender Detaillierung darzustellen, können im Videokonferenzsystem vorgesehene Speichermittel zum Speichern komplexer visueller Informationen in hoher Qualität genutzt werden sowie Mittel zum zeitversetzten Übertragen in hoher Qualität gespeicherter visueller Informationen an den Arbeitsplatz in der Fernwartungszentrale vorgesehen werden.

Die Erfindung betrifft außerdem ein Fernwartungssystem umfassend eine Fernwartungszentrale und eine erfindungsgemäße, entfernte Fernwartungseinrichtung sowie eine Fernwartungsverbindung zum bidirektionalen Austausch von Sprachdaten, Videodaten und Maschinendaten zwischen der Fernwartungszentrale und der Fernwartungseinrichtung.

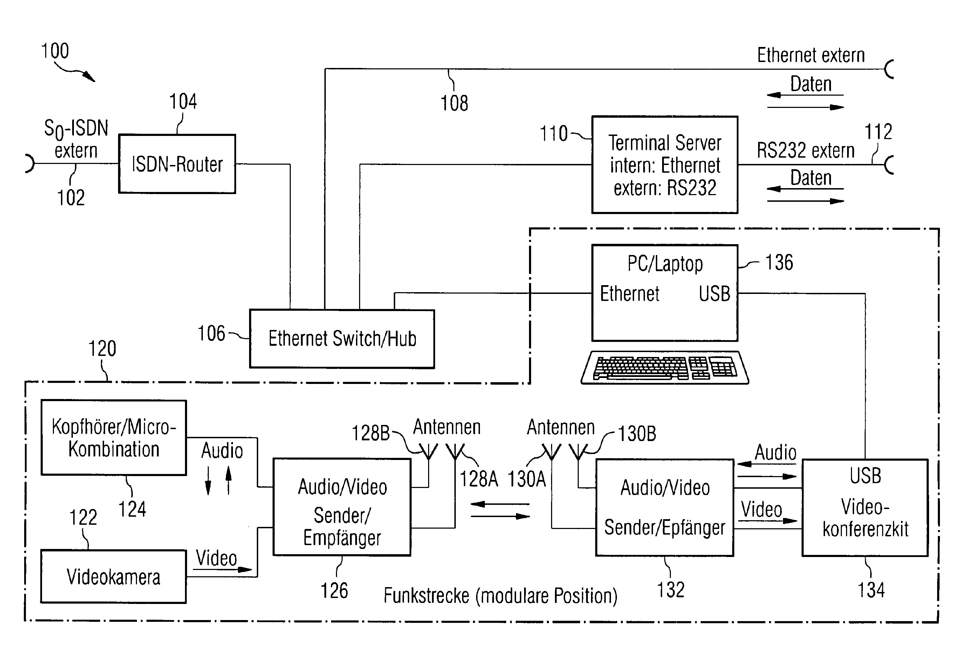

Im folgenden wird die Erfindung in Ausführungsbeispielen anhand einer Zeichnung näher erläutert. Die einzige Figur zeigt eine Fernwartungseinrichtung mit Mitteln zum Austausch von Sprachdaten, Videodaten und Maschinendaten über eine Fernwartungsverbindung.

In der Figur ist eine erfindungsgemäße Fernwartungseinrichtung 100 dargestellt, die über eine Fernwartungsverbindung 102, vorzugsweise eine ISDN-Fernwartungsverbindung, mit einer entfernten Fernwartungszentrale (nicht dargestellt) verbunden wird. Die ISDN-Fernwartungsverbindung 102 wird in einem ISDN-Router 104 terminiert. Der ISDN-Router 104 stellt im vorliegenden Ausführungsbeispiel auch einen ISDN/Ethernet-Gateway dar, d.h. im ISDN-Router 104 erfolgt die bidirektionale Umsetzung von gemäß des ISDN-Protokolls übertragenen Daten in gemäß des Ethernet-Protokolls übertragene Daten oder in gemäß einer höheren Protokollschicht, z.B. TCP/IP, übertragene Daten.

In einer bevorzugten Implementierung wird eine herkömmliche ISDN-S₀-Verbindung (2 B-Kanäle) für die Fernwartungsverbindung verwendet. Dies hat den Vorteil, daß die Fixkosten wie Grundgebühren für den ISDN-Anschluß oder Gerätekosten für den vergleichsweise einfachen zweikanaligen Router sowie die Verbindungskosten niedrig sind. Ferner ist eine kompakte und portable Bauweise für die gesamte Fernwartungseinrichtung möglich, da solche Router als hochkompakte Geräte kommerziell verfügbar sind. Schließlich ist - bei geeigneter Wahl des für die Audio/Videokodierung verwendeten Codec - die mit dieser Konfiguration erreichbare maximale Bandbreite von 128 kbit/s ausreichend beispielsweise für die Überwachung von Bewegungsabläufen. Im Zusammenhang mit einer geeigneten Wahl eines Codec sei darauf hingewiesen, daß nicht alle Codecs, die in bekannten Videokonferenzsystemen zum Einsatz kommen, für den Einsatz im Zusammenhang mit der vorliegenden Erfindung tauglich sind, denn häufig sind Videokonferenzcodecs unter der Prämisse erstellt, daß sich die videographierten Objekte (d.h. die Videokonferenzteilnehmer und deren unmittelbare Umgebung) nur geringfügig und langsam bewegen. Ferner arbeiten Videokonferenzsysteme häufig mit geringer Bildauflösung, was zu entsprechend schlechter Detaildarstellung führt.

Im Zusammenhang mit der vorliegenden Erfindung wird vorzugsweise ein standardisierter Codec, etwa ITU-T H.261 und/oder H.263, eingesetzt, der Bilder im Common Intermediate Format (CIF), auch bekannt als Full Common Intermediate Format (FCIF) oder Bilder im Quarter Common Intermediate Format (QCIF) mit einer Bildrate von vorzugsweise mehr als 15 Bildern je Sekunde verarbeitet.

Es ist natürlich möglich, statt eines ISDN-S₀-Anschlusses 102 mehrere ISDN-S₀-Anschlüsse zu kombinieren, um eine größere maximale Bandbreite durch Bündelung einer entsprechenden Anzahl von B-Kanälen zu erreichen. Denkbar ist auch, direkt auf einen Primärmultiplexanschluß zuzugreifen. In diesen Fällen ist lediglich ein angepaßter ISDN-Router notwendig.

Vorzugsweise wird vorgesehen, daß der ISDN-Router 104 der Fernwartungseinrichtung 100 stets die Verbindung von der Fernwartungszentrale entgegennimmt, nicht jedoch umgekehrt. Dies ist vorteilhaft, da so das Personal des Anwenders der Maschine die Fernwartungseinrichtung lediglich aufstellen und einschalten muß, während der Aufbau der Fernwartungsverbindung und die Aktivierung sowie der Betrieb der Fernwartungseinrichtung 100 durch das Serviceteam des Herstellers der Maschine von der Fernwartungszentrale aus erfolgt. Der Schulungsaufwand für das Personal des Anwenders der Maschine hinsichtlich des Umgangs mit der Fernwartungseinrichtung kann so minimal gehalten werden.

Dabei wird als Sicherheitsmaßnahme der Router so eingerichtet, daß tatsächlich nur Verbindungen von der Fernwartungszentrale entgegengenommen und andere Verbindungsanforderungen ignoriert werden. Diese Maßnahme kann beispielsweise mittels des Parameters "Calling Party Address" oder ähnlicher, den rufenden Teilnehmer identifizierender Parameter umgesetzt werden, bei Bedarf ergänzt um einen Kennwortmechanismus, um unbefugten Zugriff bei ansonsten korrekten, möglicherweise gefälschten, Teilnehmeridentifikationsparametern zu verhindern.

Neben der Verwendung des ISDN- bzw. Telefonnetzes als Weitverkehrsnetzwerk für die Fernwartungsverbindung zwischen Fernwartungszentrale und Fernwartungseinrichtung 100 ist es natürlich auch möglich, paketnetzbasierte Weitverkehrsverbindungen einzusetzen, z.B. Verbindungen über das Internet.

In einer Variante kann dazu anstelle des ISDN-Routers ein DSL-Modem in die Fernwartungseinrichtung 100 integriert werden, um eine Fernwartungsverbindung mittels DSL-Verfahren herzustellen. Es sei allerdings darauf hingewiesen, daß die bekannten asymmetrischen DSL-Verbindungen, wenn deren Upload-Datenrate nicht über die mit einem ISDN-Basisanschluß erreichbare Upload-Datenrate von 128 kbit/s hinausgeht, im Zusammenhang mit der vorliegenden Erfindung keinen Vorteil gegenüber einer ISDN-Verbindung aufweisen, da die maßgebliche Datenrate die von der Fernwartungseinrichtung zu Fernwartungszentrale erreichbare ist, da in dieser Übertragungsrichtung die bandbreitenintensive Videodatenübertragung erfolgt. Geeigneter sind hier symmetrische DSL-Verbindungen oder, wo verfügbar, umgekehrte asymmetrische DSL-Verbindungen, deren Upload-Datenrate größer als die Download-Datenrate ist.

In einer weiteren Variante kann ein am Maschinenstandort bereits vorhandenes Datennetzwerk verwendet werden, um eine Fernwartungsverbindung herzustellen. Beispielhaft kann dies durch eine Ethernetverbindung 108 realisiert werden, die zum Anschluß der Fernwartungseinrichtung 100 an ein lokales Netzwerk am Maschinenstandort dient. Dieses Netzwerk verfügt dann entweder über bekannte Mechanismen über einen Zugang zum Internet, oder über einen ISDN-Router (nicht dargestellt), der anstelle des ISDN-Routers 104 die Fernwartungsverbindung über das ISDN- bzw. Telefonnetz und die oben erläuterte Gateway-Funktion liefert. Der Vorteil der Nutzung bereits vorhandener Infrastruktur liegt darin, daß die Fernwartungseinrichtung dann keinen eigenen Router 104 benötigt und somit noch platzsparender implementiert werden kann.

In weiteren Ausführungsbeispielen können statt der bislang betrachteten drahtgebundenen Fernwartungsverbindungen auch solche verwendet werden, bei denen zumindest der Netzzugang drahtlos erfolgt - nicht dargestellt. In Betracht kommen dabei in erster Linie moderne Übertragungsverfahren wie UMTS oder mehrere kombinierte GSM/GPRS-Verbindungen sowie WLAN und satellitengestützte Verfahren. Ferner ist es möglich, beliebige andere drahtlose oder drahtgebundene Übertragungsverfahren für die Fernwartungsverbindung einzusetzen, sofern eine Umsetzung auf Ethernet möglich ist.

Die auf Ethernet umgesetzten, über die Fernwartungsverbindung empfangenen Daten werden im Beispiel der Figur einem Ethernet-Switch oder einem Ethernet-Hub 106 zugeleitet. Alternativ können die Daten auch direkt einem (mobilen) PC 136 zugeleitet werden. Die empfangenen Daten werden beispielsweise anhand der Zieladressen oder anderer Informationen in Audio/Video-Daten, Maschinendaten und ggf. andere Daten unterschieden.

Maschinendaten, beispielsweise Daten zur Fernsteuerung der Maschine oder Programmdaten/Parameterdaten zum Aktualisieren der Steuersoftware oder Betriebsparameter der Maschine, können an einen Terminalserver 110 weitergeleitet werden, der eine Umsetzung von Daten gemäß des Ethernet-Protokolls in Daten gemäß eines RS232-Maschinensteuerprotokolls zum Weiterleiten an die Maschinensteuerung mittels RS232-Schnittstelle 112 vornimmt. Dies ist im Zusammenhang mit älteren Maschinen erforderlich, die lediglich über eine RS232-Steuerschnittstelle verfügen. Natürlich können die Komponente 110 und die Schnittstelle 112 auch so ausgestaltet sein, daß die Umsetzung auf eine beliebige andere Maschinensteuerschnittstelle erfolgt. Hat eine Maschinensteuerung bereits eine Ethernetschnittstelle, entfällt die Notwendigkeit der physikalischen Anpassung der Schnittstellen und somit die Komponente 110.

Es sei darauf hingewiesen, daß der Terminalserver 110 als separate, hochkompakte Hardwarekomponente oder in Software im Zusammenhang mit dem (mobilen) PC 136 realisiert werden kann, wobei dann der PC 136 eine entsprechende Schnittstelle zum Anschluß an die Maschinensteuerung aufweist. Da PCs in der Regel RS232-Schnittstellen aufweisen, ist dies ohne weiteres möglich.

Die Audio/Video-Daten werden an ein Videokonferenzsystem 120 weitergeleitet. Dieses Videokonferenzsystem umfaßt zumindest eine portable Kamera 122, welche der Aufnahme visueller Informationen an der zu wartenden Maschine dient. Als portable Kamera 122 kann eine beliebige analoge oder digitale Videokamera eingesetzt werden, die vorzugsweise geringe Abmessungen und ein geringes Gewicht aufweist, um auch längere Zeit in der Hand gehalten werden zu können. Die Kamera 122 kann zur Stabilisierung der gelieferten Bilder um ein Stativ ergänzt werden - nicht dargestellt. Bevorzugt wird eine Kamera gewählt, deren Auflösung die angestrebte Auflösung FCIF/QCIF des Codec übersteigt und die dabei mindestens 25 Bilder pro Sekunde liefert. Geeignet sind beispielsweise herkömmliche Consumer-Camcorder, die Signale liefern, die etwa dem PAL Standard entsprechen.

Ferner umfaßt das Videokonferenzsystem eine portablen Sprech-und Höreinrichtung 124, bevorzugt ein Kopfhörer/Mikrofon-Set. Vorteilhaft können geschlossene Kopfhörer mit einem Mikrofon mit Richtcharakteristik eingesetzt werden, um eine Beeinträchtigung der Kommunikation am Maschinenstandort durch Maschinenlärm zu verringern. Geeignete (Industrie-)Kopfhörer/Mikrofon-Sets sind kommerziell verfügbar.

Das Videokonferenzsystem kann ferner eine portable Anzeigeeinheit (nicht dargestellt) in Verbindung mit der Sprech- und Höreinrichtung 124 umfassen, etwa ein am Kopfhörerbügel befestigtes Display, ein sogenanntes Head Mounted Display (HMD). Über dieses Display können einem Servicetechniker von der Fernwartungszentrale aus schnell Montageskizzen oder ähnliches angezeigt werden.

Die portablen Einrichtungen, d.h. die Kamera 122 und die Sprech- und Höreinrichtung 124 sowie ggf. die Anzeigeeinheit sind mit einer Videokonferenzsteuerung gekoppelt. Die Kopplung kann drahtgebunden oder drahtlos erfolgen, wie weiter unten mit weiteren Details beschrieben.

Die Videokonferenzsteuerung besteht im bevorzugten Ausführungsbeispiel aus einem mobilen PC bzw. Laptop 136 und einem per USB mit diesem verbundenen Videokonferenzkit 134. Diese Lösung ist bevorzugt, da eine spezialisierte Hardwarelösung (das Videokonferenzkit 134) die Steuerung und bidirektionale Signalverarbeitung der portablen Geräte übernimmt. Zur Signalverarbeitung gehört dabei eine Analog-Digitalwandlung bzw. Digital-Analogwandlung der Audio- und Videosignale, eine Kodierung der Signale durch einen vorzugsweise in Hardware implementierten Codec und bidirektionale Übertragung des kodierten Audio/Videodatenstroms mittels USB an den mobilen PC 136 sowie an die genannten portablen Geräte. Der mobile PC 136 hingegen dient der Darstellung von Informationen und Optionen mittels eines Bildschirms sowie der Steuerung der Bandbreite des vom Hardware-Codec des Videokonferenzkits 134 gelieferten Datenstroms.

Neben der portablen Kamera 122 können weitere Kameras vorgesehen sein, die dann ebenfalls drahtgebunden oder drahtlos an die Videokonferenzsteuerung angeschlossen sind - nicht dargestellt. Beispielsweise können so fest an der Maschine installierte Kameras einbezogen werden, oder es kann eine Personenkamera vorgesehen werden, die im Zusammenhang mit dem mobilen PC 136 für Audio/Videokonferenzen zwischen dem Nutzer der Fernwartungseinrichtung und dem Servicemitarbeiter in der Fernwartungszentrale engesetzt werden kann. Dabei kann der mobile PC 136 als komfortables Werkzeug zum Umschalten zwischen den einzelnen Videoquellen dienen und - durch Ansteuerung des Codec im Videokonferenzkit 134 - den einzelnen Videoquellen partielle Bandbreiten zuweisen. In der Regel wird dabei einer Videoquelle die gesamte für Videoübertragung zur Verfügung stehende Bandbreite zugewiesen.

Natürlich kann anstelle des mobilen PC bzw. Laptop 136 auch ein Desktop-PC oder ein portabler Industrie-PC eingesetzt werden. Ferner ist es möglich, auf den (mobilen) PC 136 vollständig zu verzichten, indem das Videokonferenzkit um die o.g. Funktionen erweitert wird.

Wird, wie oben beschrieben, die RS232-Schnittstelle des PC 136 zum Anschluß der Fernwartungseinrichtung an die Maschine genutzt, ist allerdings zu beachten, daß der PC 136 in die Nähe der Maschine verbringbar sein muß, da die Länge einer RS232-Leitung in der Regel auf 12m begrenzt ist. Hierfür bietet sich eine in einem fahrbaren Rack eingebaute Fernwartungseinrichtung mit Desktop-PC oder Industrie-PC an, oder bevorzugt eine in einem portablen bzw. tragbaren Koffer integrierte Lösung mit mobilem PC bzw. Laptop. In letzterem Fall ist die Fernwartungseinrichtung auch als portables Installationswerkzeug für die Einrichtung und Inbetriebnahme einer Maschine geeignet und kann durch den installierenden Servicemitarbeiter des Maschinenherstellers verwendet werden, um Hilfe aus der Fernwartungszentrale zu erhalten. Hierzu kann auf dem mobilen PC 136 sämtliche Software gespeichert werden, die ein Servicemitarbeiter üblicherweise mitführt.

Der PC 136 kann ferner dazu verwendet werden, Audio/Video-daten zwischenzuspeichern und zeitversetzt über die Fernwartungsverbindung zu übertragen. Dies ist vorteilhaft, wenn ein Bewegungsablauf so schnell und/oder komplex ist, daß die Komprimierung des Datenstroms, die für die Übertragung bei der zur Verfügung stehenden Bandbreite vorgenommen werden müßte, die Qualität der Übertragung zu stark beeinträchtigen würde.

Wie bereits erwähnt kann die Verbindung zwischen dem Videokonferenzkit 134 und den portablen Geräten (Kamera 122, Sprech- und Höreinrichtung 124, ggf. portable Anzeigeeinheit) drahtgebunden oder drahtlos erfolgen. Obgleich drahtgebundene Verbindungen, wie weiter oben erläutert, verschiedene Nachteile aufweisen, die im wesentlichen aus den in Maschinenhallen herrschenden Sicherheitsanforderungen resultieren, kann die Verbindung natürlich prinzipiell drahtgebunden erfolgen. Um die potentiellen Gefahren durch und für die Kabel zu reduzieren, können einerseits bei der Installation einer Maschinenhalle (oder auch nachträglich) an geeigneten Punkten in der Maschinenhalle, beispielsweise an jeder Maschine, Steckverbinder zum bedarfsweisen Anschluß der portablen Geräte vorgesehen werden, so daß minimale Strecken mittels frei verlegtem Kabel überbrückt werden müssen. Alternativ können Deckenkonstruktionen vorgesehen werden, von denen Kabel zum Anschluß der portablen Geräte oder die portablen Geräte selbst herabhängen und die eine Bewegung innerhalb der Maschinenhalle ermöglichen. Drahtgebundene Verbindungen überbrücken Entfernungen von bis zu 500 Metern, ggf. sind hierfür zusätzlich Kabelmodems notwendig - nicht dargestellt.

Bevorzugt kommt jedoch eine drahtlose Verbindung zum Einsatz, wie in der Figur dargestellt. Dabei wird das Videokonferenzkit mit einem Audio/Video-Sendeempfänger 132 verbunden, der mit einer oder mehreren Antennen 130 gekoppelt ist. Ein weiterer Sendeempfänger 126 wird portabel ausgelegt und den portablen Geräten 122, 124 zugeordnet und ebenfalls mit einer oder mehreren Antennen 128 gekoppelt.

In einer bevorzugten Ausgestaltung werden zwei verschiedene Frequenzbänder für die Übertragung von Audio und Video verwendet, und zwar das gebührenfreie Band um 2,4 GHz für die Videoübertragung und das gebührenfreie Band um 433 MHz für die Audioübertragung. Entsprechend sind für jeden der Sendeempfänger 126, 132 zwei Antennen 128A-B und 130A-B vorzusehen. Um die drahtlose Verbindung robust gegen Störungen zu gestalten und an die räumlichen Verhältnisse in Maschinenhallen anzupassen (einzelne Maschinen können 60 Meter und länger sein), hat es sich als sinnvoll herausgestellt, den anmeldepflichtigen Leistungsbereich in den genannten Frequenzbereichen zu verwenden, bevorzugt mit einer Sendeleistung von 4 Watt. Dies erlaubt die Überbrückung von Entfernungen von bis zu 200 Metern.

Die Übertragung der Audio- und Videosignale von der Sprech-und Höreinrichtung 124 und der Kamera 122 zum Videokonferenzkit 134 erfolgt bevorzugt analog, kann aber in einer Alternative auch digital erfolgen.

Ferner ist es möglich, den Hardware-Codec für die Kodierung des Audio/Videodatenstroms und die benötigten A/D- und D/A-Wandler bereits kameraseitig anzuordnen, z.B. in den kameraseitigen Sender 126 zu integrieren, um die Datenrate bzw. Bandbreite der über die (drahtlose) Verbindung zu übertragenden Audio/Videodaten bereits vor dieser Übertragung auf die Datenrate/Bandbreite zu reduzieren, die letztlich zum Arbeitsplatz in der Fernwartungszentrale weitergeleitet wird.

Wie weiter oben bereits erörtert sieht die vorliegende Erfindung auch die Anwendung der Fernwartungseinrichtung im Zusammenhang mit einem Fernwartungssystem vor. Es sind prinzipiell drei Datenströme zu unterscheiden: Maschinendaten, Audiodaten und Videodaten. Dabei können sich die Audio- und Videodatenströme aus Datenströmen mehrerer Quellen zusammensetzen. Jedem der drei Datenströme wird eine partielle Bandbreite zugeordnet, wobei die Summe der partiellen Bandbreiten, d.h. die Bandbreite des ausgehenden Datenstromes des Routers 104, die maximal verfügbare Bandbreite (z.B. 128 kbit/s im Fall eines ISDN-S₀-Anschlusses) nicht übersteigen kann. Audio- und Videodaten ergeben im vorliegenden Fall aufgrund der Verarbeitung durch einen gemeinsamen Codec einen gemeinsamen Datenstrom, in welchem bereits eine optimale, dynamische Aufteilung der entsprechenden partiellen Datenströme vorgenommen ist, so daß beispielsweise nur Videodaten übertragen werden, wenn keine Audiodaten zur Verfügung stehen (Sprechpause).

Somit verbleibt in diesem Ausführungsbeispiel die dynamische Zuordnung zweier partieller Bandbreiten, nämlich für Maschinendaten und für Audio/Videodaten. Dies kann erfolgen, indem beide Datenquellen versuchen, mit einer voreingestellten maximalen partiellen Bandbreite zum Arbeitsplatz in der Fernwartungszentrale zu senden, im Fall eines ISDN-S₀-Anschlusses z.B. 128 kbit/s für Audio/Video und 64 kbit/s für Maschinendaten. Die Gesamtbandbreite übersteigt dann die sendeseitig maximal verfügbare Bandbreite und wird durch den Verwurf von Paketen im ISDN-Router 104 auf die maximal verfügbare Bandbreite gedrosselt. Für mittels TCP/IP übertragene Daten stellen TCP/IP-Wiederholungsmechanismen sicher, daß kein Datenverlust eintritt; für mittels UDP übertragene Daten hingegen tritt im Mittel ein Datenverlust ein. Die tatsächlich wirksamen partiellen Bandbreiten stellen sich dann auf Werte jeweils unterhalb der genannten Maxima ein, wobei gleichzeitig Bursts ausgeglichen werden.

In einer Fortbildung kann der Switch 106 so konfiguriert werden, daß den verschiedenen Ports, über welche die Maschinendaten und die Audio/Videodaten geleitet werden, unterschiedliche Prioritäten zugewiesen werden. Vor dem Verwurf von Paketen im ISDN-Router 104 kann somit ein Datenstrom zusammengestellt werden, der entsprechend mehr Pakete des priorisierten partiellen Datenstromes aufweist.

Zusätzlich kann vorgesehen werden, daß entweder der Nutzer der Fernwartungseinrichtung oder der Nutzer des Arbeitsplatzes in der Fernwartungszentrale Einflußmöglichkeiten auf die Priorisierung der Datenströme und damit partiellen Bandbreiten haben. Eine Einflußmöglichkeit wäre ein Mikrofonschalter, der den Audiodatenstrom in Richtung Fernwartungszentrale kontrolliert, indem bei ausgeschaltetem Mikrofon keine Audiodaten erzeugt werden. Eine weitere Einflußmöglichkeit sind Kameraschalter, welche die ggf. mehreren Kameras zu- und abschalten und somit die Bandbreite des Videodatenstromes kontrollieren, wobei bei abgeschalteten Kameras keine Videodaten erzeugt werden. Schließlich können, beispielsweise im PC 136, Steuermechanismen zum Einstellen der maximalen Bandbreiten des Audio/Videodatenstroms und des Maschinendatenstroms vorgesehen werden. Auf diese Steuerung kann auch von der Fernwartungszentrale zugegriffen werden, um zeitkritische Daten bevorzugt zu erhalten (etwa ein Kamerabild mit der maximalen zur Verfügung stehenden Bandbreite oder Zugriff auf die Maschinensteuerung mit der maximalen zur Verfügung stehenden Bandbreite).

Die vorliegende Erfindung kann im Zusammenhang mit Maschinen oder Taktstraßen eingesetzt werden, die, wie eingangs erläutert, so komplex sind, daß Aufgaben wie Wartung, Fehlerdiagnose und Fehlerbehebung nur durch hochspezialisierte Fachkräfte oder unter deren unmittelbarer Anleitung ausgeführt werden können. Dabei kommen sowohl stationäre Maschinen wie Werkzeugmaschinen, Verpackungsmaschinen oder Druckmaschinen in Betracht wie auch prinzipiell bewegliche Maschinen wie Förderanlagen, Straßenbaumaschinen, Gleisbaumaschinen, Krananlagen, Erntemaschinen und andere Maschinen, deren Bewegungsradius auf ein begrenztes Einsatzgebiet beschränkt ist, aus welchem der Abtransport sehr aufwendig und kostspielig ist.

## Patentansprüche

1. Fernwartungseinrichtung (100) zum Anschluß an die Steuerung einer Maschine mit Mitteln zum bidirektionalen Austausch von Sprachdaten, Videodaten und Maschinendaten über eine Fernwartungsverbindung mit einer entfernten Fernwartungszentrale, wobei die Fernwartungsverbindung eine maximale Bandbreite aufweist und wobei den Sprach-, Video- und Maschinendaten jeweils partielle Bandbreiten zugeordnet sind,
**dadurch gekennzeichnet,**
**daß** die Fernwartungseinrichtung Mittel zur dynamischen Anpassung der partiellen Bandbreiten aufweist.

2. Fernwartungseinrichtung (100) nach Anspruch 1, bei der die Fernwartungsverbindung eine ISDN-Verbindung ist, die eine maximale Anzahl von Kanälen aufweist, deren kombinierte Bandbreite der maximalen Bandbreite entspricht, wobei die Fernwartungseinrichtung zusätzlich Routermittel (104) zum Zuschalten von Kanälen aufweist, wenn im Ergebnis der dynamische Anpassung der partiellen Bandbreiten eine größere Bandbreite benötigt wird als durch die aktuelle Anzahl von Kanälen lieferbar, und zum Abschalten von Kanälen, wenn im Ergebnis der dynamische Anpassung der partiellen Bandbreiten eine geringere Bandbreite benötigt wird als durch die um die Zahl Eins verminderte aktuelle Anzahl von Kanälen lieferbar.

3. Fernwartungseinrichtung (100) nach Anspruch 1, bei der die Fernwartungsverbindung eine Breitband-Paketnetzverbindung (108) ist.

4. Fernwartungseinrichtung (100) nach Anspruch 1, bei der die Fernwartungsverbindung eine drahtlose Verbindung ist.

5. Fernwartungseinrichtung (100) nach Anspruch 4, bei der die drahtlose Verbindung eine UMTS-Verbindung oder eine GSM-Verbindung mit Kanalbündelung oder eine GPRS-Verbindung oder eine WLAN-Verbindung oder eine Satellitenverbindung ist.

6. Fernwartungseinrichtung (100) nach einem der Ansprüche 1 bis 5, umfassend ein Videokonferenzsystem (120) zumindest bestehend aus einer portablen Kamera (122) zur Aufnahme visueller Informationen an der zu wartenden Maschine und unidirektionalen Übertragung dieser visuellen Informationen an einen Arbeitsplatz in der Fernwartungszentrale und einer portablen Sprech- und Höreinrichtung (124) zum bidirektionalen Übertragen gesprochener Worte zwischen der Fernwartungseinrichtung (100) und dem Arbeitsplatz in der Fernwartungszentrale.

7. Fernwartungseinrichtung (100) nach Anspruch 6, bei der zusätzlich ein portables Anzeigegerät zum Anzeigen visueller Informationen vorgesehen ist, welche vom Arbeitsplatz in der Fernwartungszentrale an das Videokonferenzsystem der Fernwartungseinrichtung übertragen werden.

8. Fernwartungseinrichtung (100) nach einem der Ansprüche 6 oder 7, bei dem die portablen Geräte (122, 124) drahtlos mit dem restlichen Videokonferenzsystem gekoppelt sind.

9. Fernwartungseinrichtung (100) nach einem der Ansprüche 6 bis 8, dessen Videokonferenzsystem (120) zusätzlich Speichermittel (136) zum Speichern komplexer visueller Informationen in hoher Qualität und Mittel zum zeitversetzten Übertragen in hoher Qualität gespeicherter visueller Informationen an den Arbeitsplatz in der Fernwartungszentrale aufweist.

10. Fernwartungssystem umfassend eine Fernwartungszentrale und eine entfernte Fernwartungseinrichtung (100) nach einem der vorhergehenden Ansprüche sowie eine Fernwartungsverbindung zum bidirektionalen Austausch von Sprachdaten, Videodaten und Maschinendaten zwischen der Fernwartungszentrale und der Fernwartungseinrichtung (100).

11. Fernwartungssystem nach Anspruch 10, **gekennzeichnet durch** Sicherungsmittel, die den Aufbau der Fernwartungsverbindung ausschließlich initiiert **durch** die Fernwartungszentrale zulassen.
